# EUROPEAN PATENT APPLICATION

(11) **EP 0 826 473 A1**
(43) Date of publication of application: **04.03.1998**
(21) Application number: 96202453.5
(22) Date of filing: 03.09.1996
(51) Int. Cl.: B29C 41/04, B29C 70/64, B29C 44/04

(54) **Method for the production of a laminated plastic product**

(71) Applicant: Zweva Engineering B.V., 2517 KX Den Haag (NL)
(72) Inventor: Smee, Tony, Clayhill, Essex IG5 0SJ (GB); Smyth, David Adrian, Houghton Regis, Dunstable LU5 5SA (GB); van 't Veer, Pieter, 2584 CP Den Haag (NL)
(74) Representative: de Bruijn, Leendert C.

(57) **Abstract**

A method for the production of a plastic product having a laminated structure, such as a product in sheet or plank form, by means of rotational moulding, comprising the following steps:
introducing a granular or pulverulent plastic material and a further granular or pulverulent material into a rotational mould,
rotating the rotational mould and heating the pulverulent materials to a temperature such that the plastic material melts in the mould cavity of the rotational mould and forms a plastic layer and the further material collects on or in the inner surface of the plastic layer,
cooling the materials in the rotational mould, and
removing the plastic product from the rotational mould.

## Description

The invention relates to the production of plastic products which have a laminated structure. Examples of such products are laminated plastic products such as laminated planks and sheets and the like. Other laminated products also fall within the field to which the invention relates, such as those products which have a hard shell and a foam interior.

A significant disadvantage of such products is that the production thereof is complex. Attachment of the various layers to one another must be carried out with care to counteract separation phenomena.

The aim of the invention is, therefore, to provide a method by means of which said disadvantages can be avoided. Said aim is achieved by a method for the production of a plastic product having a laminated structure, such as a product in sheet or plank form, by means of rotational moulding, comprising the following steps:
introducing a granular or pulverulent plastic material and at least one further granular or pulverulent material into a rotational mould,
rotating the rotational mould and heating the pulverulent materials to a temperature such that the plastic material melts in the mould cavity of the rotational mould and forms a plastic layer and the further material collects on or in the inner surface of the plastic layer,
cooling the materials in the rotational mould, and
removing the plastic product from the rotational mould.

Preferably, the particle size of the plastic material is smaller than the particle size of the further material.

The material of larger particle size will, under the influence of the movements which arise on rotating the rotational mould, collect on the inner surface of the material of lower melting point. This phenomenon can be used in various ways to provide the plastic product with a laminated structure.

According to the invention, the method can first of all be used for applying a surface layer which has special properties. The products concerned here can be, in particular, products which must be able to be walked on, such as cover elements for permanent or temporary covering of trenches, holes and the like in an area where there is pedestrian traffic, such as in a pavement or road surface.

When carrying out work underground, such as laying cables or pipes, it must be ensured that the trenches, which are open for some time, are completely covered, such as in the case of driveways, access to shops and the like. It is also desirable for the trench to be completely covered outside working hours, so that said trench also presents no danger in the dark. It is then no longer necessary to install safety features, such as fencing-off.

Plastic cover elements are known which have a ridged surface, such as a squared pattern structure, to increase the frictional resistance thereof. Nevertheless it is found that a plastic surface of this type is inadequately slip-resistant, in particular when it is wet or dirty.

The aim of the invention is, therefore, also to provide a method for the production of a product which does have the desired slip-resistance. According to the invention this is possible by means of rotational moulding, comprising the following steps:
introducing a granular or pulverulent plastic material and a granular or pulverulent anti-slip material into a rotational mould,
rotating the rotational mould and heating the pulverulent materials such that the plastic material melts in the mould cavity of the rotational mould and forms a plastic layer and the anti-slip material deposits on or in the inner surface of the plastic layer,
cooling the materials in the rotational mould, and
removing the plastic product from the rotational mould.

The plastic product obtained is found to be coated with the anti-slip material on that side of the product which faces away from the interior wall of the rotational mould. Said anti-slip material has, surprisingly, not dispersed completely through the molten plastic, which has the advantage that the particles come to lie on or close to the surface able to withstand pedestrian traffic. The result is a plastic product which has outstanding anti-slip characteristics.

An advantage of the method is that thermoplastic materials can be used, which renders recycling possible. Furthermore, an eye-catching colour, for example yellow, can be chosen, which cannot be lost as a result of wear of the surface layer of the product.

The method can be carried out in various ways. According to a first possibility, the interior surface of the mould cavity is partly covered with insulating material for local prevention of deposition of molten plastic, such that a plastic part is moulded without an enclosed cavity.

In this way a plastic part is obtained which is suitable for further processing, that surface of the plastic part which originally faced the wall of the rotational mould being smooth and the other surface carrying anti-slip material. Incidentally, a second and possibly a third plastic part can be moulded in the rotational mould at the same time, if the size of the mould cavity permits this.

A second possibility, with which no insulating material is used, comprises moulding a cavity-enclosing plastic layer and splitting this plastic layer into at least two plastic parts to expose the layer of anti-slip material on each plastic part.

In this case a closed plastic product is moulded which has a smooth outer surface and an interior surface which is coated with anti-slip material. After splitting this product into two parts, the anti-slip layer is exposed, after which the parts can be further processed.

The load-bearing capacity can be adjusted by varying the thickness of the walls, which in the case of rotational moulding is possible in a simple manner by introducing more or less plastic material into the mould cavity.

In the case of an element which is intended to serve as a cover element for covering a trench, the reinforcing ridges preferably run transverse to the longitudinal direction of the element. The reason for this is that the load imposed on the cover element, for example by traffic crossing the trench, is transverse to its longitudinal direction, whilst, on the other hand, a certain degree of flexural suppleness in the longitudinal direction is desirable such that the cover element can adjust to irregularities, differences in height and the like over the length of the trench.

Furthermore, the cover element can preferably have a convex curvature transverse to the longitudinal direction of the element, such that the long sides of the element are relatively low and the risk of tripping is minimum.

To prevent it being possible for the element to be pushed away from the trench, the support means have a ridge for positioning the element above a trench.

The invention also relates to a rotational mould for the production of a plastic product as described above. The interior wall of the mould cavity of said mould is locally coated with teflon material.

According to a second possible application of the method according to the invention, plastic products which have foamed layers can also be produced. To this end, the invention also relates to a method for the production of a plastic product which has a shell and a foamed layer, such as for a surfboard and the like, by means of rotational moulding, comprising the following steps:
introducing a granular or pulverulent plastic material and a granular or pulverulent foam-forming material into the rotational mould,
rotating the rotational mould and heating the pulverulent materials such that the plastic material melts in the mould cavity of the rotational mould and forms a plastic layer and the foam-forming material deposits on or in the inner surface of the plastic layer to cause the plastic material located on the inner surface of the plastic layer to foam,
cooling the plastic material in the rotational mould, and
removing the plastic product from the rotational mould.

The foamed product produced in this way consists of only one plastic material, which not only has advantages from the production engineering standpoint, such as good adhesion of the various structured layers, but also has advantages from the environmental standpoint in view of the ease of recycling.

Preferably, the granular or pulverulent foam-forming material consists of particles which are composed of a blowing agent and the plastic material.

Naturally, a product which has a completely closed outer skin and an interior foam fill can also be produced in this way. A product of this type has outstanding cohesion and consequently has good strength and stiffness characteristics.

Reference is made to US-A 3 542 912, which discloses a method for producing products composed of two or more plastic materials of different melting points by means of rotational moulding. According to this known method, the total quantity of plastic material is melted, the plastic material which melts first depositing on the wall of the rotational mould. The plastic material which melts at a higher temperature then deposits on the first layer of low-melting plastic.

The disadvantage of this known method is that the product thus obtained cannot be readily recycled since it consists of different plastics. Moreover, it is not possible to produce a product having an anti-slip surface by this method.

The invention will be explained in more detail below with reference to a few illustrative embodiments shown in the figures.

Figure 1 shows a perspective and partially cross-sectional view of a cover element according to the invention.

Figure 2 shows a longitudinal section of the element from Figure 1.

Figure 3 shows a top view of a second embodiment of a cover element.

Figure 4 shows a cross-section along IV-IV in Figure 3.

Figure 5 shows a cross-section through a rotational mould.

Figure 6 shows a further variant.

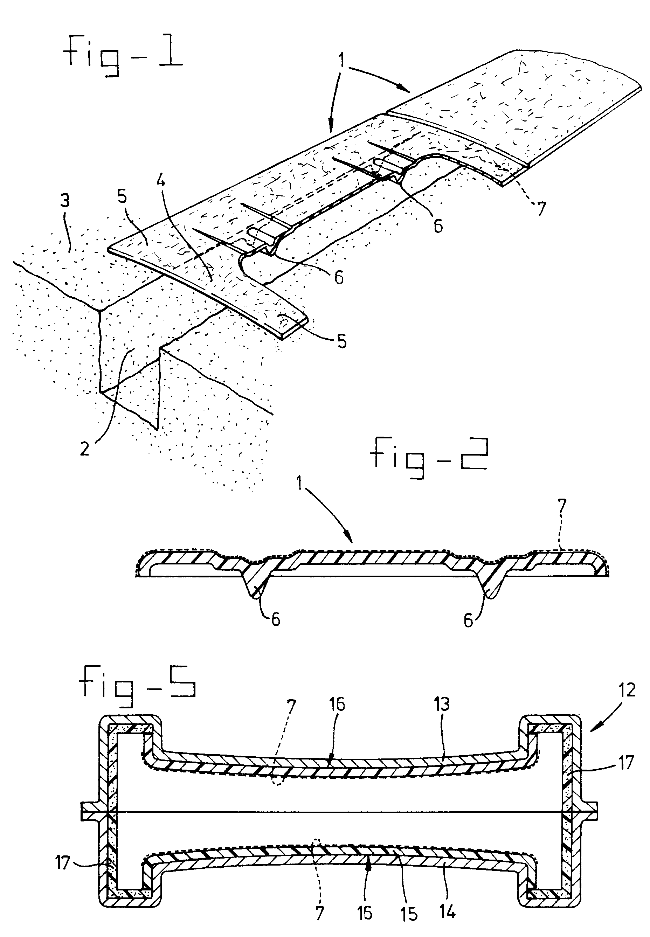

The cover element shown in Figure 1 is fitted above a trench 2, which is in a substrate 3.

The cover element 1 has a central section 4 and two downward sloping side sections 5, which ensure that tripping when walking onto the cover element 1 is virtually precluded.

On the underside, the cover element 1 has ridges 6, which hold the cover element 1 in place in the trench 2 so that shifting is precluded.

An anti-slip layer of anti-slip particles 7, such as corundum, glass beads and the like, is provided on the top surface, in particular of sections 4 and 5. As a result of said anti-slip layer, slipping and skidding when walking or driving onto the cover element 1 can be prevented, even when the element is dirty and/or damp.

By virtue of the ridges 6, the cover element is flexurally rigid in the transverse direction. On the other hand the cover element 1 has a certain degree of flexibility in the longitudinal direction, so that adjustments to the variations in height of the trench are possible.

According to the invention, the cover element 1 is produced in a rotational mould, for example a rotational mould 12 as shown in Figure 5. Such a rotational mould 12 consists, in a known manner, of two halves 13, 14 attached to one another. A pulverulent material is introduced into such a rotational mould 12, after which the rotational mould is closed and rotated with heating. As is known, the pulverulent material deposits in the form of a molten plastic layer on the inner surface of the rotational mould, in such a way that the desired plastic product is obtained after cooling.

According to the invention, in addition to the pulverulent plastic material for the plastic product 15, a pulverulent anti-slip material, such as corundum or glass beads is introduced into the mould. Said anti-slip material must have a particle size which is somewhat larger than the particle size of the plastic material. On rotating the rotational mould 12, both the plastic material and the anti-slip material disperse through the mould, the plastic material coming to lie in contact with the wall of the rotational mould 12 and the anti-slip material of somewhat larger particle size coming to lie on the inner surface of said plastic material.

In this way a plastic product 16 consisting of a layer of plastic material 15 with the pulverulent anti-slip material on the inner surface thereof is obtained in the mould.

In the embodiment shown in Figure 5, two products 16 are obtained since the opposing transverse sides of the rotational mould 15 are coated with teflon coating 17, on which only a very thin layer of plastic material deposits. The ultimate products 16 can be separated therefrom in a simple manner.

Although the anti-slip layer 7 is on the inside in the rotational mould 12, in the finished product according to Figure 2 said anti-slip layer 7 is on the outside and also on the top of the cover element 1.

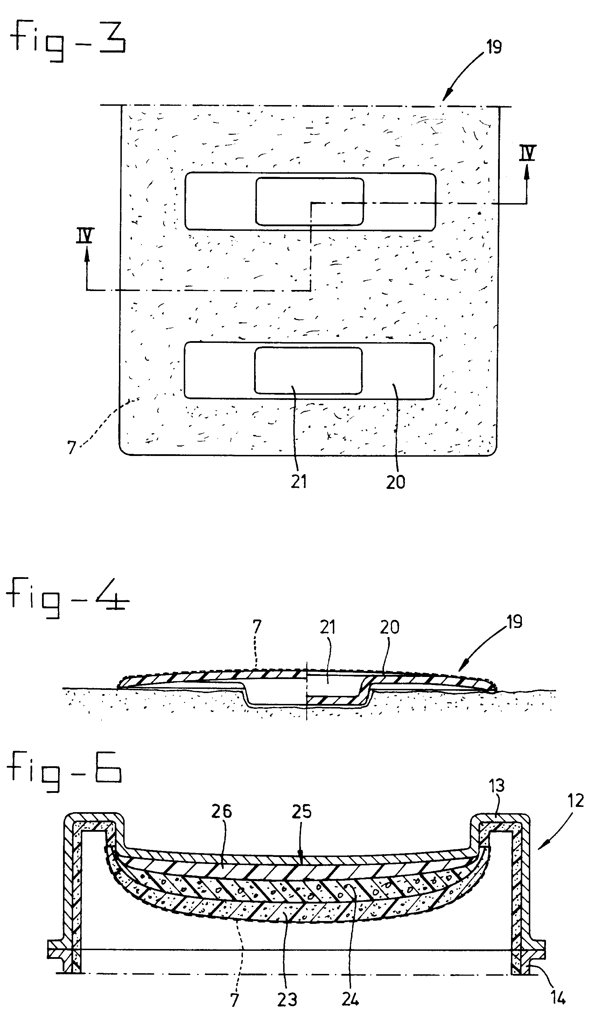

In the embodiment shown in Figures 3 and 4 an alternative cover element 19 is shown, which has transverse recesses, with steps 20, 21, in its top surface.

Instead of a granular anti-slip material, it is also possible to introduce a granular foam-forming material into the rotational mould.

As shown in Figure 6, by this means a product 25 can be obtained which has a solid plastic layer 26 close to the wall of the mould, whilst further towards the inside, where the foam-foaming pulverulent material of larger particle size had collected, a foam layer 23, 24 has formed.

The product 25, which is composed of a single plastic material, has a transition zone 24 at the transition between the solid layer 21 and the foam layer 23.

Although Figure 6 shows a product 21 which has a solid layer 26 on only one side, it is, of course, possible, with a suitable design of the rotational mould, also to obtain a product which has an all-round closed shell composed of a solid plastic layer, the interior of which shell is filled with a foamed plastic of the same plastic material.

## Claims

1. Method for the production of a plastic product (1, 16, 19, 25) having a laminated structure, such as a product in sheet or plank form, by means of rotational moulding, comprising the following steps:
introducing a granular or pulverulent plastic material and one further granular or pulverulent material into a rotational mould (12),
rotating the rotational mould and heating the pulverulent materials to a temperature such that the plastic material melts in the mould cavity of the rotational mould and forms a plastic layer (15) and the further material (7) collects on or in the inner surface of the plastic layer,
cooling the materials in the rotational mould, and
removing the plastic product from the rotational mould.

2. Method according to Claim 1, wherein the particle size of the plastic material is smaller than the particle size of the further material.

3. Method according to Claim 1 or 2, for the production of a plastic product (1, 16, 19) which has an anti-slip surface (7), such as a cover element, gangway and the like, by means of rotational moulding, comprising the following steps:
introducing a granular or pulverulent plastic material and a granular or pulverulent anti-slip material into a rotational mould,
rotating the rotational mould and heating the pulverulent materials such that the plastic material melts in the mould cavity of the rotational mould and forms a plastic layer and the anti-slip material deposits on or in the inner surface of the plastic layer,
cooling the materials in the rotational mould, and
removing the plastic product from the rotational mould.

4. Method according to Claim 3, comprising the step of partially covering the interior surface of the mould cavity with insulating material (17) for local prevention of the deposition of molten plastic (15), such that a plastic part (16) is moulded.

5. Method according to Claim 3, comprising splitting said plastic layer into at least two plastic parts to expose the layer of anti-slip material on each plastic part.

6. Element produced in accordance with the method according to one of Claims 3-5, wherein reinforcing ridges (8, 20, 21) running transverse to the longitudinal direction of the element (1, 19) are provided.

7. Element according to Claim 6, wherein the top has a convex (4, 5) curvature transverse to the longitudinal direction of the element (1).

8. Element according to Claim 6 or 7, wherein a ridge (6) is provided for positioning the element (1) above a trench (2).

9. Rotational mould (12) for the production of a plastic product according to Claim 4, wherein the interior wall of the mould cavity is locally coated with teflon material (17).

10. Method according to Claim 1, 2 or 3 for the production of a plastic product which has a shell (22) and a foamed layer (23, 24), such as for a surfboard and the like, by means of rotational moulding, comprising the following steps:
introducing a granular or pulverulent plastic material and a granular or pulverulent foam-forming material into the rotational mould,
rotating the rotational mould and heating the pulverulent materials such that the plastic material melts in the mould cavity of the rotational mould and forms a plastic layer and the foam-forming material deposits on or in the inner surface of the plastic layer to cause the plastic material located on the inner surface of the plastic layer to foam,
cooling the plastic material in the rotational mould, and
removing the plastic product from the rotational mould.

11. Method according to Claim 10, wherein the granular or pulverulent foam-foaming material consists of particles which are composed of a blowing agent and the plastic material.
